# EUROPEAN PATENT APPLICATION

(11) **EP 3 521 834 A1**
(43) Date of publication of application: **07.08.2019**
(21) Application number: 19275013.1
(22) Date of filing: 28.01.2019
(51) Int. Cl.: G01P 15/13, G01P 15/125, B81B 5/00, G01P 15/08

(54) **ACCELEROMETERS**

(30) Priority: 05.02.2018 GB 201801847
(71) Applicant: Atlantic Inertial Systems Limited, Plymouth, Devon PL6 6DE (GB)
(72) Inventor: MALVERN, Alan, Plymouth, Devon PL6 6DE (GB)
(74) Representative: Dehns

(57) **Abstract**

A method for controlling closed loop operation of a capacitive accelerometer 100 comprises applying first in-phase and anti-phase PWM drive signals 302, 304, respectively, to a first pair of fixed capacitive electrodes 106a, 108b and applying second in-phase and anti-phase PWM drive signals 306, 308, respectively, to a second pair of fixed capacitive electrodes 108a, 106b. A displacement of a proof mass 102 relative to fixed capacitive electrodes 106a, 108b, 108a, 106b is sensed by measuring a pickoff signal from the proof mass 102 and adjusting the mark-space ratio of the first and/or second PWM drive signals 302, 304, 306, 308 to provide a restoring force on the proof mass 102 that balances an applied acceleration and maintains the proof mass 102 at a null position. The first and second PWM drive signals 302, 304, 306, 308 applied to the first and second pairs of fixed capacitive electrodes 106a, 108b, 108a, 106b are offset in time from one another by an offset period.

## Description

### Technical Field

The present disclosure relates to capacitive accelerometers, and in particular to methods for closed loop operation of capacitive accelerometers.

### Background

Accelerometers are electromechanical devices that are widely used to measure acceleration forces due to motion and/or vibration. Capacitive accelerometers may find use in applications including seismic sensing, vibration sensing, inertial sensing and tilt sensing. Capacitive accelerometers are typically implemented as micro electromechanical systems (MEMS) and may be manufactured from a semiconductor material such as silicon. A typical MEMS sensing structure for a capacitive accelerometer comprises a proof mass moveably mounted to a support, with a set of electrode fingers extending from the proof mass being interdigitated with one or more sets of fixed electrode fingers so as to form a differential capacitor. The electrodes of the sensing structure are connected to suitable drive and pickoff electronics. In an open loop configuration, the electronics are arranged to drive the fixed electrode fingers with sine or square wave signals and the proof mass moves under acceleration to provide a pickoff signal that is a rectified voltage appearing on the output. WO 2004/076340 provides an example of an open loop accelerometer. However, open loop accelerometers can have limited performance in terms of bandwidth, linearity and dynamic range.

An accelerometer sensing structure designed for open loop operation can also be used in a closed loop configuration by using drive electronics to provide a variable electrostatic force to the electrodes to achieve force balancing. WO 2005/084351 provides an example of a closed loop electronic control circuit using pulse width modulation (PWM) of the drive signals. In such a closed loop configuration, the electronics are arranged to drive pairs of the fixed electrode fingers with in-phase and anti-phase PWM signals so that the proof mass is fixed in position by virtue of the electrostatic forces nulling the inertial force due to acceleration. The mark-space ratio of the PWM drive signals can be adjusted to produce a variable balancing force.

It is known in the art to have an accelerometer comprising four sets of fixed electrodes interdigitated with the moving frame, connected as two pairs. Such a device is described in WO 2015/124910. In such a device, sets 1 and 3 are connected, and sets 2 and 4 are also connected. There are two signals per PWM cycle that are sampled from the proof mass by an analogue to digital converter (ADC), typically 2µs after each transition (two per cycle), to allow for a settling time. These two successive samples are then differenced, and the result is proportional to the proof mass offset from the null position. This result is then fed back into the control scheme, allowing for the proof mass offset to be nulled by changing the mark-space ratio of the PWM drive signals. However, this configuration does not make use of all of the potential information available from all four electrodes acting as a double differential pair.

Accelerometer biases can occur in a device due to temperature gradients along the MEMS structure, or life-related relaxation effects, which are not removed by existing signal processing schemes. For example, the sets of fixed electrodes in a MEMS accelerometer are formed in a silicon substrate that is mounted to a glass substrate with a differential thermal expansion of about 0.2 ppm/°C. This results in a thermal gradient across the accelerometer inducing differential motion. Presence of such gradients can cause inaccurate readings from the accelerometer, and is a particular issue with older devices, as their performance degrades over time due to stress relaxation effects.

It is an object of the present disclosure to overcome one or more of the disadvantages outlined above.

### Summary

According to a first aspect of this disclosure, there is provided a method for controlling closed loop operation of a capacitive accelerometer, the capacitive accelerometer comprising:
a fixed substrate and a proof mass mounted to the fixed substrate by flexible support legs for in-plane movement along a sensing axis in response to an applied acceleration;
the proof mass comprising a plurality of sets of moveable electrode fingers extending substantially perpendicular to the sensing axis and spaced apart along the sensing axis;
at least two pairs of fixed capacitive electrodes, wherein a first pair of the fixed capacitive electrodes comprises a first fixed electrode and a fourth fixed electrode, and a second pair of the fixed capacitive electrodes comprises a second fixed electrode and a third fixed electrode, and wherein each fixed capacitive electrode comprises a set of fixed capacitive electrode fingers extending substantially perpendicular to the sensing axis and spaced apart along the sensing axis;
wherein the sets of fingers of the first and third fixed electrodes are arranged to interdigitate with the sets of moveable electrode fingers with a first offset in one direction along the sensing axis from a median line between adjacent fixed fingers, and the sets of fingers of the second and fourth fixed electrodes are arranged to interdigitate with the sets of moveable electrode fingers with a second offset in the opposite direction along the sensing axis from a median line between adjacent fixed fingers;
the method comprising:
   applying first in-phase and anti-phase PWM drive signals, respectively, to the first pair of fixed capacitive electrodes and applying second in-phase and anti-phase PWM drive signals, respectively, to the second pair of fixed capacitive electrodes; and
   sensing a displacement of the proof mass relative to the fixed capacitive electrodes by measuring a pickoff signal from the proof mass and adjusting the mark-space ratio of the first and/or second PWM drive signals to provide a restoring force on the proof mass that balances an applied acceleration and maintains the proof mass at a null position;
   wherein the first and second PWM drive signals applied to the first and second pairs of fixed capacitive electrodes are offset in time from one another by an offset period.

Thus a method is provided that allows for the extraction of additional information relating to any temperature and/or stress gradients across the device. By offsetting the first and second PWM drive signals in time from one another, it becomes possible to extract separate information from the two pairs of fixed capacitive electrodes, even though it is a common proof mass moving relative to both pairs of fixed electrodes at the same time. For example, with the offset period the pickoff signal can be sampled at least four times per cycle (once after each PWM drive signal transition). These additional samples result in measurable differences in the first and second PWM drive signals and can be used to extract information relating to any bias shift / scale factor differences between the two pairs of fixed capacitive electrodes.

The capacitive accelerometer used in this method comprises a double differential pair of fixed capacitive electrodes, the fixed electrode fingers interdigitating with the moveable electrode fingers of a common proof mass. Preferably, the offsets of the movable capacitive electrode fingers from the median line are equal in the two directions along the sensing axis.

According to a further example of the present disclosure, the method further comprises adjusting the offset period dependent on the mark-space ratio. As the mark-space ratio is adjusted due to an applied linear acceleration, the two PWM drive signals are offset from one another by a different amount. For example, as the mark-space ratio increases, the offset period decreases. This is to ensure that the pickoff signal is measured during a period just after a transition (and optionally after allowing for a settling time), but before the next transition.

According to another example of the present disclosure, measuring the pickoff signal comprises taking a first sample after a transition in the first PWM drive signals, and taking a second sample after another transition in the first PWM drive signals. By taking two samples relating to the first PWM drive signals, information relating to the first and fourth fixed electrodes can be gathered. As the mark-space ratio of the first PWM drive signals is adjusted, the proof mass will move according to the electrostatic restoring force resulting from these signals. As the aim of closed loop operation is to restore the proof mass to the null position, the information gathered from these samples can be used to adjust the mark-space ratio of the drive signals, compensating for any difference in applied linear acceleration, or any temperature/stress gradients since the previous sample.

According to a further example of the present disclosure, measuring the pickoff signal further comprises taking a third sample after a transition in the second PWM drive signals and taking a fourth sample after another transition in the second PWM drive signals. By taking two samples relating to the second PWM drive signals, information relating to the second and third fixed electrodes can be gathered. As the mark-space ratio of the second PWM drive signals is adjusted, the proof mass will move according to the electrostatic restoring force resulting from these signals. As the aim of closed loop operation is to restore the proof mass to the null position, the information gathered from these samples can be used to adjust the mark-space ratio of the drive signals, compensating for any difference in applied linear acceleration, or any temperature/stress gradients since the previous sample.

According to an example of the present disclosure, the method further comprises determining a difference between the first and second samples to give a first error signal, and using the first error signal to adjust the mark-space ratio of the first PWM drive signals. This first error signal contains information relating to the position of the proof mass at the times of the first and second samples. Accordingly, it can be used to adjust the mark-space ratio of the first PWM drive signals, in order to aid in the restoration of the proof mass to the null position.

According to another example of the present disclosure, the method further comprises determining a difference between the third and fourth samples to give a second error signal, and using the second error signal to adjust the mark-space ratio of the second PWM drive signals. This first error signal contains information relating to the position of the proof mass at the times of the third and fourth samples. Accordingly, it can be used to adjust the mark-space ratio of the second PWM drive signals, in order to aid in the restoration of the proof mass to the null position.

According to an example of the present disclosure, in addition or alternatively, the method further comprises summing values of the mark-space ratios of the first and second PWM drive signals to determine the applied acceleration. The two mark-space ratio values contain information relating to the offset of the proof mass from the null position. For example, if the proof mass was at the null position, the mark-space ratios would be equal to 50:50. By summing the mark-space ratio values (i.e. the total offset of the proof mass from the null position), the applied acceleration can be determined.

According to an example of the present disclosure, in addition or alternatively, the method further comprises differencing values of the mark-space ratios of the first and second PWM drive signals to determine compensation information relating to any temperature and/or stress gradients across the accelerometer. By differencing the PWM mark-space ratio values, it is possible to determine any differences between the two pairs of fixed capacitive electrodes, resulting from any temperature and/or stress gradients. Such gradients may be a result of long-term ageing effects such as elastomer relaxation due to thermal hysteresis, or differential temperatures within the device package. With this compensation information, the device can compensate for any such gradients in the output signal. This results in increased performance, especially later in the lifetime of the device, when these effects become more prevalent.

According to an example of the present disclosure, in addition or alternatively, the method further comprises performing time division multiplexing after sampling in order to separate data corresponding to the first PWM drive signals from data corresponding to the second PWM drive signals. As all four samples are from the same pickoff signal, but relate to two different PWM drive signals, time division multiplexing allows for the separation of the data. This separation means that signal processing of the two data sets can occur independently, for simplicity.

According to an example of the present disclosure, in addition or alternatively, the method further comprises measuring the pickoff signal from the proof mass after a settling period no longer than a predetermined time from a transition in the first or second PWM drive signals. As the drive signal electronics are not perfect (i.e. there is a certain ramp up/down time), a minimum settling period is introduced in order to allow for any transient components of the pickoff signal to decay. By not sampling within this period, higher accuracy of the output can be achieved.

According to a second aspect of this disclosure, there is provided a control apparatus for controlling closed loop operation of a capacitive accelerometer, the capacitive accelerometer comprising:
a fixed substrate and a proof mass mounted to the fixed substrate by flexible support legs for in-plane movement along a sensing axis in response to an applied acceleration;
the proof mass comprising a plurality of sets of moveable electrode fingers extending substantially perpendicular to the sensing axis and spaced apart along the sensing axis;
at least two pairs of fixed capacitive electrodes, wherein a first pair of the fixed capacitive electrodes comprises a first fixed electrode and a fourth fixed electrode, and a second pair of the fixed capacitive electrodes comprises a second fixed electrode and a third fixed electrode, and wherein each fixed capacitive electrode comprises a set of fixed capacitive electrode fingers extending substantially perpendicular to the sensing axis and spaced apart along the sensing axis;
wherein the sets of fingers of the first and third fixed electrodes are arranged to interdigitate with the sets of moveable electrode fingers with a first offset in one direction along the sensing axis from a median line between adjacent fixed fingers, and the sets of fingers of the second and fourth fixed electrodes are arranged to interdigitate with the sets of moveable electrode fingers with a second offset in the opposite direction along the sensing axis from a median line between adjacent fixed fingers;
the apparatus comprising:
   at least two pairs of PWM voltage generators, wherein the first pair of PWM voltage generators is arranged to generate and apply first in-phase and anti-phase PWM drive signals to the first pair of fixed capacitive electrodes, and wherein the second pair of PWM voltage generators is arranged to generate and apply second in-phase and anti-phase PWM drive signals to the second pair of fixed capacitive electrodes;
   a pickoff signal sensor arranged to sample a pickoff signal from the proof mass at least four times per first and second PWM drive signal cycle;
   first and second feedback loops, each arranged to adjust the mark-space ratio of the respective first and second PWM drive signals generated by the two pairs of PWM voltage generators, depending on the pickoff signal;
   wherein the first and second PWM drive signals are offset in time from one another by an offset period.

Such a control apparatus provides for extraction of additional information from the accelerometer as a result of the offset period between the first and second PWM drive signals. In at least some examples, the apparatus comprises a single pickoff signal measurement channel. The offset period enables downstream signal processing electronics to separate out information from the first and second PWM drive signals.

According to an example of this disclosure, the apparatus is further arranged to adjust the offset period dependent on the mark-space ratio.

According to another example of this disclosure, the pickoff signal sensor is further arranged to measure the pickoff signal by taking a first sample after a transition in the first PWM drive signals, taking a second sample after another transition in the first PWM drive signals, taking a third sample after a transition in the second PWM drive signals, and taking a fourth sample after another transition in the second PWM drive signals; and further comprising:
a first PWM demodulator arranged to determine a difference between the first and second samples to give a first error signal;
a second PWM demodulator arranged to determine a difference between the third and fourth samples to give a second error signal;
a first digital loop filter arranged to use the first error signal to adjust the mark-space ratio of the first PWM drive signals; and
a second digital loop filter arranged to use the second error signal to adjust the mark-space ratio of the second PWM drive signals.

According to another example of this disclosure, the apparatus further comprises a processor arranged to sum values of the mark-space ratios of the first and second PWM drive signals to determine the applied acceleration.

According to another example of this disclosure, the apparatus further comprises a or the processor arranged to difference values of the mark-space ratios of the first and second PWM drive signals to determine compensation information relating to any temperature and/or stress gradients across the accelerometer.

### Brief description of the drawings

One or more non-limiting examples will now be described with reference to the accompanying drawings, in which:
Fig. 1 shows a prior art structure of an accelerometer;
Fig. 2 is a block diagram of an exemplary closed loop electronic servo control scheme using first and second PWM drive signals in accordance with this disclosure;
Fig. 3 shows a timing diagram for first and second PWM drive signals with a 50:50 mark-space ratio when the system is in a steady state condition;
Fig. 4 shows a timing diagram for first and second PWM drive signals, one pair having a 50:50 mark-space ratio, and the other having a 49:51 mark-space ratio;
Fig. 5 shows a timing diagram for first and second PWM drive signals with a 60:40 mark-space ratio.
Fig. 6 shows a timing diagram for first and second PWM drive signals with a 70:30 mark-space ratio.
Fig. 7 shows a detailed timing diagram of an exemplary sampling sequence under various PWM drive signal mark-space ratios in accordance with this disclosure.

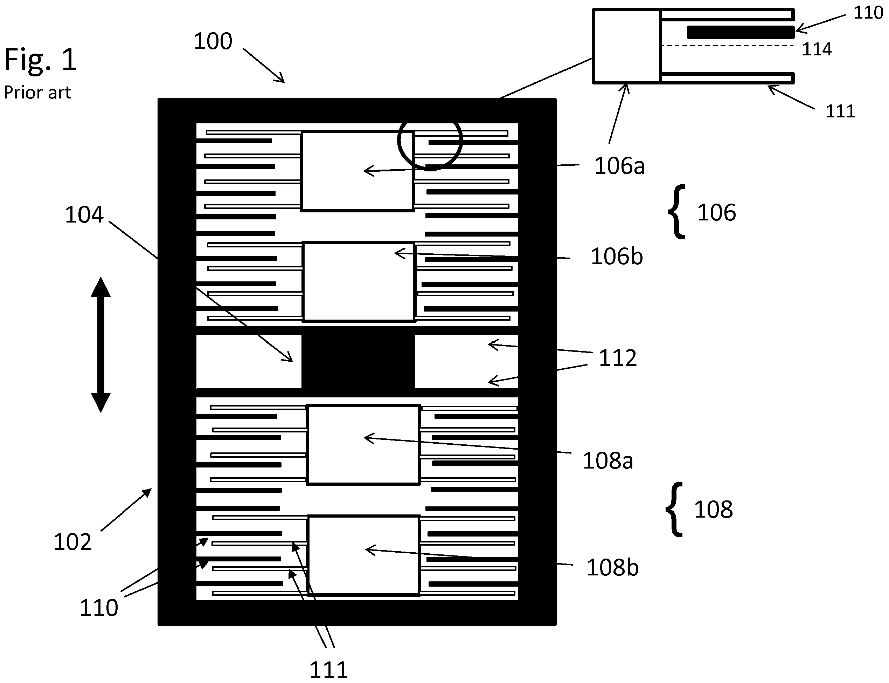

Fig. 1 shows a prior art structure of capacitive accelerometer 100, as disclosed in WO 2015/124910, the contents of which are hereby incorporated by reference. A moveable proof mass 102 is etched from a silicon wafer, which is mounted to an underlying support (not shown). In this example, the proof mass 102 takes the form of an outer frame, within which other components are mounted. A central anchor 104 is formed in the fixed substrate, which is connected to the proof mass 102 by flexible support legs 112. This allows the proof mass 102 to substantially move in-plane along a sensing axis (indicated by the double headed arrow) with its movement determined by the flexibility of the support legs 112. The proof mass 102 comprises eight sets of moveable capacitive electrode fingers 110 which extend inwards from the frame 102 substantially perpendicular to the sensing axis. Two pairs of fixed capacitive electrodes 106, 108 are arranged inside the frame of the proof mass 102, and are mounted on the support as part of the fixed substrate. Each individual fixed capacitive electrode 106a, 106b, 108a, 108b comprises two sets of capacitive electrode fingers 111 that extend outwards from the fixed electrode, substantially perpendicular to the sensing axis. The eight sets of fixed capacitive electrode fingers 111 are interdigitated with the eight sets of moveable capacitive electrode fingers 110.

Of course, the geometry of the accelerometer 100 could be reversed and the proof mass could instead be positioned inside a fixed outer frame.

As seen in the close-up part of Fig. 1, each moveable capacitive electrode finger 110 is offset from a median line 114 between adjacent fixed capacitive electrode fingers 111. The moveable capacitive electrode fingers 110 that interdigitate with the fingers 111 belonging to upper fixed capacitive electrodes 106a and 108a are offset in one direction, i.e. above the median line 114 between adjacent fingers of the fixed electrodes. The moveable capacitive electrode fingers 110 that interdigitate with the fingers 111 belonging to lower fixed capacitive electrodes 106b and 108b are offset in the other direction, i.e. below the median line 114 between adjacent fingers of the fixed electrodes. The amount that the moveable fingers are offset from the median line 114 is equal in the two directions along the sensing axis.

The fixed capacitive electrodes 106a, 106b, 108a, 108b are driven by pulse width modulation (PWM) drive signals. Within a pair of fixed capacitive electrodes, for example 106a, 106b, one electrode is driven by an in-phase PWM drive signal, while the other is driven by an anti-phase PWM drive signal. In closed loop operation, the mark-space ratio of the PWM drive signals is dynamically altered in response to an inertial acceleration applied to the accelerometer 100, in order to provide an electrostatic restoring force to the proof mass 102. This control scheme keeps the proof mass 102 in a null position under normal operating conditions, and allows for sensing of an applied acceleration.

In this prior art example, the first and third fixed electrodes 106a, 108a are driven together by having the same in-phase PWM drive signals applied, and the second and fourth fixed electrodes 106b, 108b are driven together by having the same anti-phase PWM drive signals applied. This means that in the case of a uniform temperature change, all four sets of fixed electrode fingers move in the same way, and therefore cancel out any differences in differential capacitance measured from the proof mass 102. However, this structure is susceptible to temperature gradients, as a residual bias shift would still be present under a temperature gradient. This may occur, for example, if the bonding between the support and silicon layers is not symmetrical with respect to the centre of the device 100.

The following examples assume an operating drive frequency of 50kHz, and therefore a period of 20µs for a full PWM cycle.

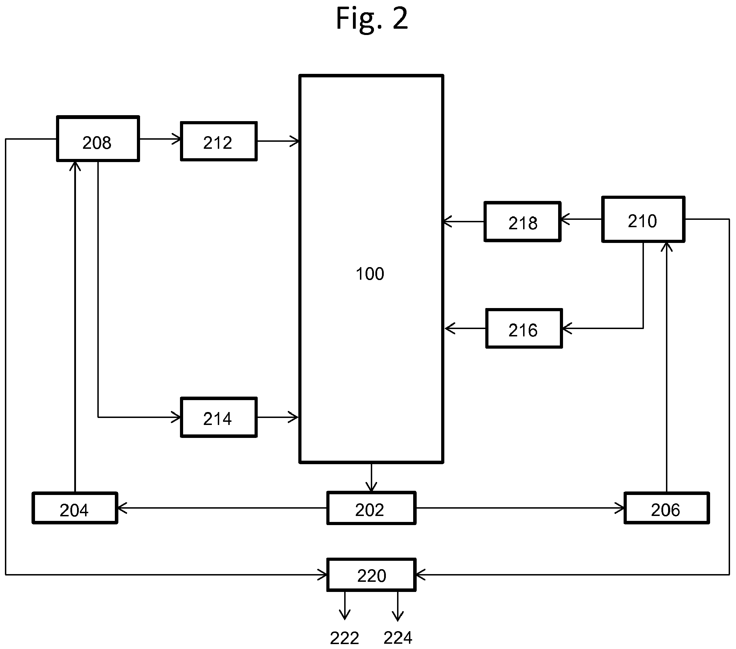

Fig. 2 shows a block diagram of an exemplary closed loop electronic servo control scheme in accordance with an example of this disclosure. The capacitive accelerometer 100 of Fig. 1 is electrically connected to a pickoff signal sensor in the form of a charge amplifier 202 e.g. via a fixed point on the moveable proof mass 102. The charge amplifier 202 is further connected to first and second PWM demodulators 204, 206. These demodulators then feed a signal to respective PWM digital loop filters 208, 210. The PWM digital loop filters 208, 210 are then connected to two pairs of PWM voltage generators. The first pair of PWM voltage generators 212, 214, generate a first in-phase and anti-phase PWM drive signal respectively. The second pair of PWM voltage generators 216, 218, generate a second in-phase and anti-phase PWM drive signal respectively. The demodulator 204, digital loop filter 208, and first pair of PWM voltage generators 212, 214 form a first feedback loop. The demodulator 206, digital loop filter 210, and second pair of PWM voltage generators 216, 218 form a second feedback loop.

First PWM voltage generator 212 generates a first in-phase PWM drive signal and is connected to the first fixed electrode 106a. Second PWM voltage generator 214 generates a corresponding first anti-phase PWM drive signal, and is connected to the fourth fixed electrode 108b. First and fourth fixed electrodes 106a and 108b make up the first differential pair. Third PWM voltage generator 216 generates a second in-phase PWM drive signal and is connected to the third fixed electrode 108a. Fourth PWM voltage generator 218 generates a corresponding second anti-phase PWM drive signal, and is connected to the second fixed electrode 106b. Second and third fixed electrodes 106a and 108b make up the second differential pair.

The connection between the charge amplifier 202 and the proof mass 102 provides a pickoff signal, representative of the proof mass offset under an applied inertial acceleration, to the charge amplifier 202. The charge amplifier 202 comprises an analogue to digital converter (ADC) that samples the pickoff signal at the proof mass 102 four times per PWM cycle. The exact timing of the sample depends on multiple factors. The ADC samples the signal at the proof mass 102 at a time after a settling period, for example 2 µs, from a previous sample, or a PWM drive signal transition. A settling period of 2 µs is typical for standard accelerometer electronics. This value is dependent on the exact specifications of the ADC and the PWM voltage generators. The PWM voltage generators have a maximum slew rate, and therefore a minimum ramp-up time on their voltage output, for example 800 ns. This ramp-up can introduce transient signals into the drive voltage, and they must therefore be allowed to decay before a sample is taken, to ensure low noise, high performance operation.

The first and second PWM drive signals are offset in time from one another by an offset period. This offset period changes with the mark-space ratio to ensure that the four samples in a cycle are never within the predetermined settling period. This settling time allows for any transient signals to decay before a sample is taken. The charge amplifier 202 then performs time division multiplexing, and passes the respective signals to PWM demodulators 204, 206.

The first PWM demodulator 204 takes the two samples from the first pair of coupled, fixed electrodes 106a, 108b, and calculates a first error signal based on the difference of the two sample values. The second PWM demodulator 206 takes the two samples from the second pair of coupled, fixed electrodes 106b, 108a, and calculates a second error signal based on the difference of the two sample values. These error signals are representative of the offset of the proof mass 102 from the null position. The first and second error signals are equal to zero for a 50:50 mark-space ratio, corresponding to the proof mass 102 being in the null position. The change in PWM mark-space ratio is linear with the applied acceleration. The first and second error signals are then passed to the PWM digital loop filters 208, 210.

PWM digital loop filter 208 takes the first error signal from PWM demodulator 204, and calculates a corresponding first PWM mark-space ratio that will provide the proof mass 102 with the sufficient electrostatic restoring force (in combination with the restoring force from the second PWM drive signal) to return it to the null position. PWM digital loop filter 210 takes the second error signal from PWM demodulator 206, and calculates a corresponding second PWM mark-space ratio that will provide the proof mass 102 with the sufficient electrostatic restoring force (in combination with the restoring force from the first PWM drive signal) to return it to the null position. It is the sum of the two electrostatic restoring forces that cause the proof mass 102 to return to the null position.

The respective calculated mark-space ratio is then passed from the PWM digital loop filters 208, 210, to the corresponding PWM voltage generator 212, 214, 216, 218. PWM digital loop filter 208 provides PWM voltage generators 212, 214 with their respective mark-space ratios. PWM digital loop filter 210 provides PWM voltage generators 216, 218 with their respective mark-space ratios.

Optionally a processor 220 takes a value of the first and second mark-space ratios from the PWM loop filters 208, 210, and performs calculations and/or comparisons on the values. For example, the sum of the two values provides an acceleration output 222 that is representative of the applied linear acceleration. For example, the difference of the two values provides compensation information 224 that can later be used to remove the effects of stress/temperature-induced movement that would normally cause an accelerometer bias.

The processor 220, or another external processor connected thereto, can also calculate a thermal model of the accelerometer, making use of the compensation information 224, in order to compensate for bias or scale factor differences arising from temperature or stress gradients. The compensation information 224 may be combined with a sensed operating temperature for the accelerometer 100, for example as measured by an external temperature sensor. The processor 220, or other external processor, can apply this model to the acceleration output 222 after calibration, for example using a thermal compensation algorithm, to correct any errors arising from the gradients detailed above. If the processor receives additional compensation information (e.g. temperature), this model will be improved. Thus, any errors can be better corrected for, and the accelerometer output 222 after such compensation will better represent the applied linear acceleration.

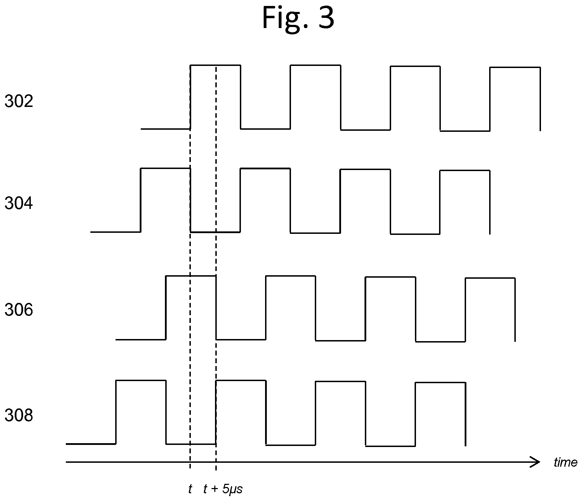

Fig. 3 shows a timing diagram for the first and second PWM drive signals at a 50:50 mark-space ratio. This situation is standard under zero applied inertial acceleration (zero g). First PWM drive signals 302, 304 are generated by first and second PWM voltage generators 212, 214, and are provided to the first pair of fixed capacitive electrodes 106a, 108b. As shown, the two signals are in-phase, and 180 degrees out of phase, i.e. anti-phase, respectively. Second PWM drive signals 306, 308 are generated by third and fourth PWM voltage generators 216, 218, and are provided to the second pair of fixed capacitive electrodes 106b, 108a. As before, these two signals are in-phase and anti-phase respectively. As shown on the time axis, the two pairs of first and second PWM drive signals are 5µs offset from one another. Specifically, the two times during which the pairs of signals transition from low to high, or high to low, are offset from one another by an offset period of 5µs. With a 20µs period for the PWM signals, this offset of 5µs allows sufficient time for the ADC in charge amplifier 202 to sample the proof mass 102, without this sample falling in the minimum 2µs settling period.

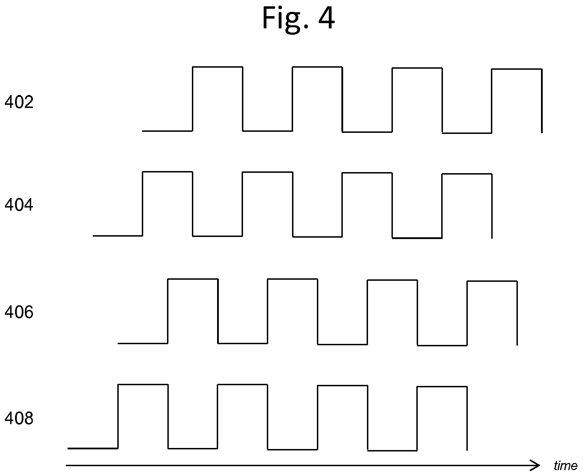

Fig. 4 shows a timing diagram for the first and second PWM drive signals at a steady state condition, but under a temperature or stress gradient. As in Fig. 3, first PWM drive signals 302, 304 have a 50:50 mark-space ratio. However, as an example, second PWM drive signals 406, 408 have a 49:51 mark-space ratio, which slightly differs from the first PWM drive signals by virtue of the temperature or stress gradient. A potential cause of this difference in control is a temperature gradient across the device 100. As the two pairs of drive signals are generated by two separate PWM digital loop filters 208, 210, each one may produce slightly different results, as the individual electrode pairs respond to both the external applied inertial force, and any internal differences within the device 100. These differences may be a scale factor difference, or a bias (offset) difference.

Overall, the mean of the two pairs of PWM drive signal mark-space ratios gives information relating to the applied inertial acceleration, whereas the difference between the two pairs of mark-space ratios gives compensation information. This compensation information can then be used to remove effects such as thermal hysteresis due to mounting stresses, long term thermal cycling effects, or long term ageing due to stress relief within the device 100 package.

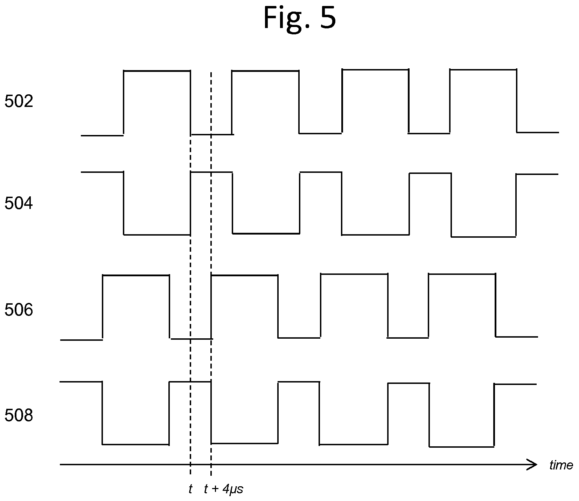

Fig. 5 shows a timing diagram for the first and second PWM drive signals at a 60:40 mark-space ratio. This situation is standard under low applied inertial acceleration (low g), for example 5-15g. First PWM drive signals 502, 504 are generated by PWM voltage generators 212, 214, and are provided to the first pair of fixed capacitive electrodes 106a, 108b. As shown, the two signals are in-phase, and anti-phase respectively. Second PWM drive signals 506, 508 are generated by PWM voltage generators 216, 218, and are provided to the second pair of fixed capacitive electrodes 106b, 108a. As before, these two signals are in-phase and anti-phase respectively. As shown on the time axis, the two pairs of signals are 4µs offset from one another. Specifically, the two times during which the pairs of signals transition from low to high, or high to low, are offset from one another by an offset period of 4µs. This is the maximum offset that is attainable with such a mark-space ratio at 50kHz, and provides sufficient time for the ADC in charge amplifier 202 to sample the proof mass 102, without the sample falling in the minimum 2µs settling period.

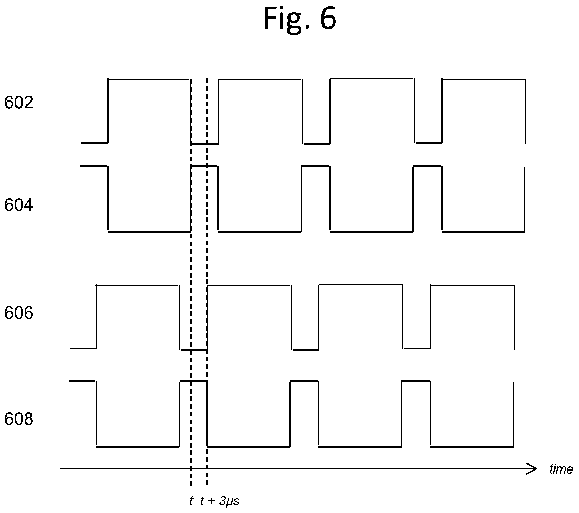

Fig. 6 shows a timing diagram for the first and second PWM drive signals at a 70:30 mark-space ratio. This situation is standard under high applied inertial acceleration (high g), for example 15-30g. First PWM drive signals 602, 604 are generated by PWM voltage generators 212, 214, and are provided to the first pair of fixed capacitive electrodes 106a, 108b. As shown, the two signals are in-phase, and anti-phase respectively. Second PWM drive signals 606, 608 are generated by PWM voltage generators 216, 218, and are provided to the second pair of fixed capacitive electrodes 106b, 108a. As before, these two signals are in-phase and anti-phase respectively. As shown on the time axis, the two pairs of signals are 3µs offset from one another. Specifically, the two times during which the pairs of signals transition from low to high, or high to low, are offset from one another by an offset period of 3µs. This is the maximum offset that is attainable with such a mark-space ratio at 50kHz, and provides sufficient time for the ADC in charge amplifier 202 to sample the proof mass 102, without the sample falling in the minimum 2µs offset time period.

It will be understood that as the mark-space ratio moves further away from 50:50, the two pairs of PWM drive signals have a reduced offset period, i.e. to maintain a maximum offset, whilst preserving the minimum settling period value.

As the ADC in the charge amplifier 202 requires a 1µs window to sample the proof mass 102, it will be seen that the maximum mark-space ratio that can be achieved whilst operating at 50kHz is 30:70. The duration of this sampling window is entirely dependent on the specifications of the ADC that is used, and could be much shorter or longer.

Beyond the standard operating g-range of the accelerometer, the device will continue to function as described above, except that the charge amplifier 202 will reduce the minimum settling period, instead sampling the proof mass 102 at the appropriate time. Therefore, the maximum mark-space ratio can be extended e.g. up to 75:25, with reduced performance. This is due to the introduction of errors into the accelerometer, caused by the reduced settling period. It will be understood that the accelerometer will perform optimally up until a mark-space ratio of 70:30, corresponding to an applied acceleration of around 30g. Beyond this value the accelerometer will still provide an acceleration output, but it will not be as accurate as under 30g. Of course, a smaller settling period e.g. <2µs will allow a higher mark-space ratio to be achieved, corresponding to a higher g-level.

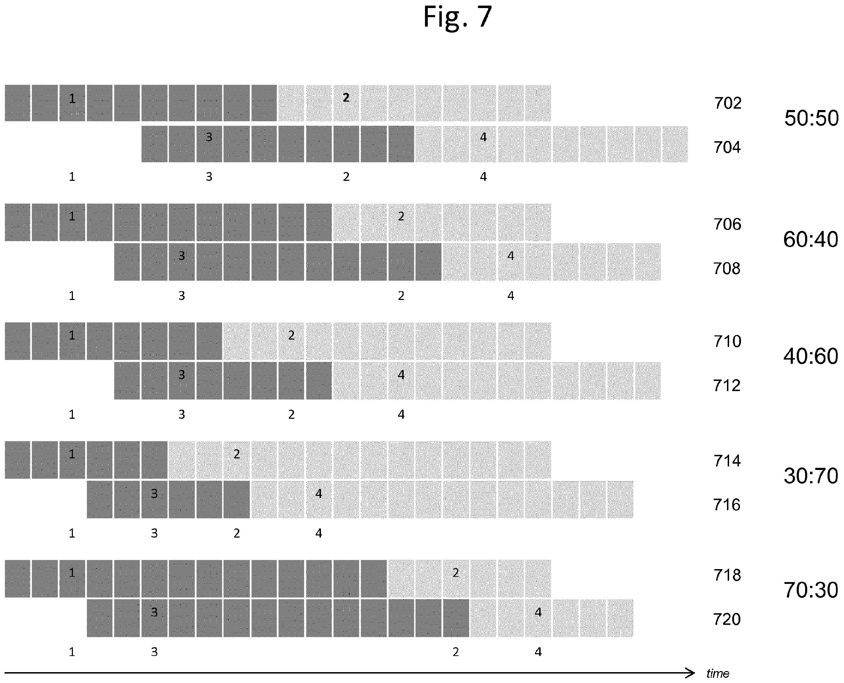

Fig. 7 shows a detailed timing diagram of an exemplary sampling sequence under various PWM drive signal mark-space ratios. Each mark-space ratio is only shown as two PWM drive signals, both in-phase, for simplicity. A single block in this timing diagram represents a time period of 1µs. The darker coloured sections represent a voltage 'high' in a PWM cycle, while the lighter shaded sections represent a voltage 'low' in a cycle. First and second PWM drive signals 702, 704 are shown with a 50:50 mark-space ratio, corresponding to a zero inertial applied acceleration. As shown, the two PWM drive signals 702, 704 are offset from one another by an offset period of 5µs. Also shown are the sampling timings 1, 2, 3, 4, which represent the respective 1µs window during which the ADC in the charge amplifier 202 samples the signal from the proof mass 102. It can be seen that the sample timings 1, 2, 3, 4, are offset from the transition of a PWM drive signal by the minimum settling period, in this case 2µs.

PWM drive signals 706, 708 show a mark-space ratio of 60:40, corresponding to a low g applied inertial acceleration. As before, the sample timings are delayed from any PWM drive signal transition by the minimum settling period, in this case 2µs. The two PWM drive signals 706, 708 are offset from each other by 4µs in this example.

PWM drive signals 710, 712 show a mark-space ratio of 40:60 corresponding to a low g applied inertial acceleration, but in the opposite direction as in the case of a 60:40 mark-space ratio. As before, the sample timings are delayed from any PWM drive signal transition by the minimum settling period, in this case 2µs. The two PWM drive signals 706, 708 are offset from each other by 4µs in this example.

PWM drive signals 714, 716 show a mark-space ratio of 30:70, corresponding to a high g applied inertial acceleration. As before, the sample timings are delayed from any PWM drive signal transition by the minimum settling period, in this case 2µs. It can be seen in this example that this mark space ratio of 30:70 is the maximum that this control scheme will support, whilst maintaining a minimum settling period of 2µs for sample timings, and a 1µs window for ADC sampling. The two PWM drive signals 706, 708 are offset from each other by 3µs in this example.

PWM drive signals 718, 720 show a mark-space ratio of 70:30, corresponding to a high g applied inertial acceleration, but in the opposite direction as in the case of a 30:70 mark-space ratio. As before, the sample timings are delayed from any PWM drive signal transition by the minimum settling period, in this case 2µs. Again, it can be seen in this example that this mark space ratio of 70:30 is the maximum that this control scheme will support, whilst maintaining a minimum settling period of 2µs for sample timings, and a 1µs window for ADC sampling. The two PWM drive signals 706, 708 are offset from each other by 3µs in this example.

## Claims

1. A method for controlling closed loop operation of a capacitive accelerometer, the capacitive accelerometer comprising:
a fixed substrate and a proof mass mounted to the fixed substrate by flexible support legs for in-plane movement along a sensing axis in response to an applied acceleration;
the proof mass comprising a plurality of sets of moveable electrode fingers extending substantially perpendicular to the sensing axis and spaced apart along the sensing axis;
at least two pairs of fixed capacitive electrodes, wherein a first pair of the fixed capacitive electrodes comprises a first fixed electrode and a fourth fixed electrode, and a second pair of the fixed capacitive electrodes comprises a second fixed electrode and a third fixed electrode, and wherein each fixed capacitive electrode comprises a set of fixed capacitive electrode fingers extending substantially perpendicular to the sensing axis and spaced apart along the sensing axis;
wherein the sets of fingers of the first and third fixed electrodes are arranged to interdigitate with the sets of moveable electrode fingers with a first offset in one direction along the sensing axis from a median line between adjacent fixed fingers, and the sets of fingers of the second and fourth fixed electrodes are arranged to interdigitate with the sets of moveable electrode fingers with a second offset in the opposite direction along the sensing axis from a median line between adjacent fixed fingers;
the method comprising:
applying first in-phase and anti-phase PWM drive signals, respectively, to the first pair of fixed capacitive electrodes and applying second in-phase and anti-phase PWM drive signals, respectively, to the second pair of fixed capacitive electrodes; and
sensing a displacement of the proof mass relative to the fixed capacitive electrodes by measuring a pickoff signal from the proof mass and adjusting the mark-space ratio of the first and/or second PWM drive signals to provide a restoring force on the proof mass that balances an applied acceleration and maintains the proof mass at a null position;
wherein the first and second PWM drive signals applied to the first and second pairs of fixed capacitive electrodes are offset in time from one another by an offset period.

2. A method as claimed in claim 1, wherein the offset period is adjusted dependent on the mark-space ratio.

3. A method as claimed in claim 1 or 2, wherein measuring the pickoff signal comprises taking a first sample after a transition in the first PWM drive signals and taking a second sample after another transition in the first PWM drive signals.

4. A method as claimed in claim 3, wherein measuring the pickoff signal further comprises taking a third sample after a transition in the second PWM drive signals and taking a fourth sample after another transition in the second PWM drive signals.

5. A method as claimed in claim 3 or 4, further comprising determining a difference between the first and second samples to give a first error signal, and using the first error signal to adjust the mark-space ratio of the first PWM drive signals.

6. A method as claimed in claim 4 or 5, further comprising determining a difference between the third and fourth samples to give a second error signal, and using the second error signal to adjust the mark-space ratio of the second PWM drive signals.

7. A method as claimed in any of claims 3-6, further comprising performing time division multiplexing after sampling in order to separate data corresponding to the first PWM drive signals from data corresponding to the second PWM drive signals.

8. A method as claimed in any preceding claim, further comprising measuring the pickoff signal from the proof mass after a settling period no longer than a predetermined time from a transition in the first or second PWM drive signals.

9. A method as claimed in any preceding claim, further comprising summing values of the mark-space ratios of the first and second PWM drive signals to determine the applied acceleration.

10. A method as claimed in any preceding claim, further comprising differencing values of the mark-space ratios of the first and second PWM drive signals to determine compensation information relating to any temperature and/or stress gradients across the accelerometer.

11. A control apparatus for controlling closed loop operation of a capacitive accelerometer, the capacitive accelerometer comprising:
a fixed substrate and a proof mass mounted to the fixed substrate by flexible support legs for in-plane movement along a sensing axis in response to an applied acceleration;
the proof mass comprising a plurality of sets of moveable electrode fingers extending substantially perpendicular to the sensing axis and spaced apart along the sensing axis;
at least two pairs of fixed capacitive electrodes, wherein a first pair of the fixed capacitive electrodes comprises a first fixed electrode and a fourth fixed electrode, and a second pair of the fixed capacitive electrodes comprises a second fixed electrode and a third fixed electrode, and wherein each fixed capacitive electrode comprises a set of fixed capacitive electrode fingers extending substantially perpendicular to the sensing axis and spaced apart along the sensing axis;
wherein the sets of fingers of the first and third fixed electrodes are arranged to interdigitate with the sets of moveable electrode fingers with a first offset in one direction along the sensing axis from a median line between adjacent fixed fingers, and the sets of fingers of the second and fourth fixed electrodes are arranged to interdigitate with the sets of moveable electrode fingers with a second offset in the opposite direction along the sensing axis from a median line between adjacent fixed fingers;
the apparatus comprising:
at least two pairs of PWM voltage generators, wherein the first pair of PWM voltage generators is arranged to generate and apply first in-phase and anti-phase PWM drive signals to the first pair of fixed capacitive electrodes, and wherein the second pair of PWM voltage generators is arranged to generate and apply second in-phase and anti-phase PWM drive signals to the second pair of fixed capacitive electrodes;
a pickoff signal sensor arranged to sample a pickoff signal from the proof mass at least four times per first and second PWM drive signal cycle;
first and second feedback loops, each arranged to adjust the mark-space ratio of the respective first and second PWM drive signals generated by the two pairs of PWM voltage generators, depending on the pickoff signal;
wherein the first and second PWM drive signals are offset in time from one another by an offset period.

12. The apparatus of claim 11, wherein the offset period is adjusted dependent on the mark-space ratio.

13. The apparatus of claims 11 or 12, wherein the pickoff signal sensor is further arranged to measure the pickoff signal by taking a first sample after a transition in the first PWM drive signals, taking a second sample after another transition in the first PWM drive signals, taking a third sample after a transition in the second PWM drive signals, and taking a fourth sample after another transition in the second PWM drive signals; and further comprising:
a first PWM demodulator arranged to determine a difference between the first and second samples to give a first error signal;
a second PWM demodulator arranged to determine a difference between the third and fourth samples to give a second error signal;
a first digital loop filter arranged to use the first error signal to adjust the mark-space ratio of the first PWM drive signals; and
a second digital loop filter arranged to use the second error signal to adjust the mark-space ratio of the second PWM drive signals.

14. The apparatus of any of claims 11-13, further comprising a processor arranged to sum values of the mark-space ratios of the first and second PWM drive signals to determine the applied acceleration.

15. The apparatus of any of claims 11-14, further comprising a processor arranged to difference values of the mark-space ratios of the first and second PWM drive signals to determine compensation information relating to any temperature and/or stress gradients across the accelerometer.
